# FASCICULE DE BREVET EUROPEEN

(11) **EP 0 810 930 B1**
(45) Date de publication et mention de la délivrance du brevet: **14.08.2002**
(21) Numéro de dépôt: 96904898.2
(22) Date de dépôt: 23.02.1996
(51) Int. Cl.: B60J 7/047

(54) **TOIT OUVRANT COMPORTANT UN PANNEAU AVANT ET UN PANNEAU ARRIERE INDEPENDAMMENT MAN UVRABLE**
ÖFFNUNGSFÄHIGES DACH MIT EINEM VORDEREN UND EINEM HINTEREN, UNABHÄNGIG BETÄTIGBAREN, PANEEL
SUNROOF WITH INDEPENDENTLY MANOEUVRABLE FRONT AND REAR PANELS

(30) Priorité: 24.02.1995 FR 9502189
(43) Date de publication de la demande: 10.12.1997
(73) Titulaire: Renault S.A., 92109 Boulogne Billancourt (FR)
(72) Inventeur: METROZ, Thierry, F-75015 Paris (FR); OKAL, André, F-28100 Dreux (FR)
(86) Numéro de dépôt international: FR9600286
(87) Numéro de publication internationale: WO9626081

(56) Documents cités:
- EP-A- 0 306 647
- EP-A- 0 447 781

## Description

L'invention concerne un toit ouvrant comportant un panneau avant et un panneau arrière de fermeture, dans une direction longitudinale, d'une ouverture réalisée dans une surface fixe du toit d'un véhicule automobile, le panneau avant et le panneau arrière étant réglable indépendamment.

La publication EP-A-0 306 647 décrit un toit ouvrant comportant un panneau avant et un panneau arrière, le panneau avant ayant la possibilité d'effectuer un mouvement de translation entre une position de fin de course avant et une position de fin de course arrière et le panneau arrière ayant uniquement la possibilité de basculer vers le bas afin de laisser la place libre pour la translation du panneau avant. L'inclinaison du panneau arrière vers le bas sans le déplacement du panneau avant permet de réaliser la fonction de ventilation de l'habitacle.

Un tel toit ouvrant ne permet pas de réaliser une ouverture au niveau des places arrière mais uniquement au niveau des places avant. Les déplacements longitudinaux du panneau avant sont guidés latéralement par des rails de guidage dont la proéminance crée une discontinuité de la ligne du toit avec les côtés de caisse.

La publication EP-A-0 447 781 décrit un toit ouvrant comportant, dans une direction longitudinale, un panneau avant et un panneau arrière réglables chacun indépendamment entre une position de fin de course avant et une position de fin de course arrière et forme la base du préambule de la revendication 1.

Afin de remédier à ces inconvénients, l'invention a pour objet un toit ouvrant dont les panneaux avant et arrière peuvent se déplacer indépendamment, suivant une direction longitudinale, afin de pouvoir ouvrir en totalité la partie avant ou la partie arrière ou partiellement les deux parties.

L'invention a également pour objet un toit ouvrant dont les panneaux en position fermés permettent la continuité de la ligne du véhicule.

Selon l'invention, le panneau avant comporte d'une part une partie arrière montée à articulation autour d'un axe transversal de liaison porté par une extrémité d'un palonnier de commande, et le panneau arrière comporte une partie avant montée à translation dans une lumière de guidage dirigée longitudinalement et portée par une autre extrémité dudit palonnier de commande.

Selon une autre caractéristique de l'invention le palonnier de commande est monté à articulation autour d'un axe transversal porté par un coulisseau d'entraînement des déplacements longitudinaux du panneau avant.

Selon une autre caractéristique de l'invention la bielle de commande est montée à articulation autour d'un axe transversal d'entraînement porté par un coulisseau d'entraînement des déplacements longitudinaux du panneau arrière.

Selon une autre caractéristique de l'invention la lumière de guidage portée par le palonnier de commande est ouverte par une de ses extrémités.

Selon une autre caractéristique de l'invention la bielle de commande comporte un galet de limitation de la rotation de ladite bielle autour de l'axe transversal d'entraînement.

Selon une autre caractéristique de l'invention une extrémité de la bielle de commande porte un galet latéral qui coopère avec une rainure inclinée, débouchant sur un rai fixe de guidage des déplacements longitudinaux du panneau arrière.

Selon une autre caractéristique de l'invention la lumière de guidage est composée d'une lumière intermédiaire inclinée reliant une lumière inférieure et une lumière supérieure parallèlement disposées.

Selon une autre caractéristique de l'invention l'axe transversal de liaison est muni d'un galet latéral qui coopère avec une rainure inclinée, débouchant sur un rail fixe de guidage des déplacements longitudinaux du panneau avant.

Selon une autre caractéristique de l'invention le palonnier de commande porte latéralement un galet de limitation de la rotation dudit palonnier autour de l'axe transversal d'entraînement.

Selon une autre caractéristique de l'invention une droite passant par le centre des galets et est parallèle au bord plan de la lumière de guidage et que la distance de la droite au bord plan est égale à la distance entre la face d'appui du rail fixe et la face d'appui de la rainure de guidage.

Selon une autre caractéristique de l'invention une perpendiculaire au plan du bord de la lumière de guidage et passant par le centre du galet, est située entre l'axe d'entraînement et la lumière de guidage.

D'autres caractéristiques et avantages de l'invention apparaîtront à la lecture de la description d'exemples de réalisation d'un toit ouvrant en référence au dessin annexé dans lequel :
- la figure 1 représente une vue perspective de l'extérieur du toit ouvrant selon l'invention.
- la figure 2 représente une vue en élévation latérale des moyens d'entraînement en position fermée des panneaux.
- la figure 3 représente une vue en élévation latérale des moyens d'entraînement en position ventilation de l'habitacle.
- la figure 4 représente une vue en élévation latérale des moyens d'entraînement en position finale de la phase de déverrouillage des panneaux.
- la figure 5 représente une section des rails au niveau de l'axe de rotation du palonnier de commande.
- la figure 6 représente une section des rails au niveau de l'axe de rotation de la bielle de commande.

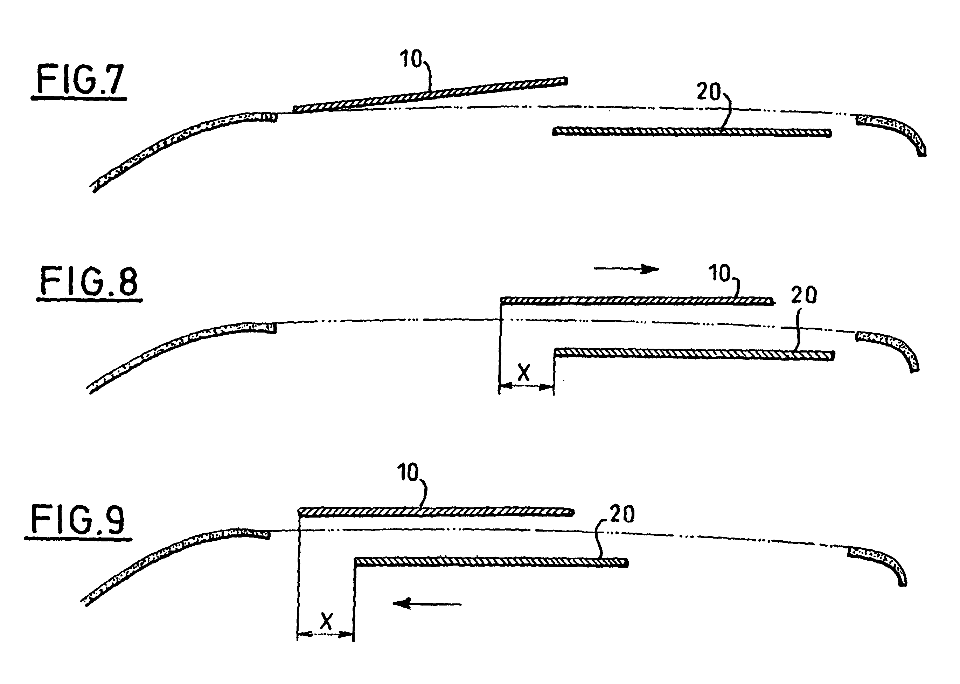

- la figure 7 représente schématiquement la position des panneaux avant et arrière lors de la ventilation de l'habitacle du véhicule.
- la figure 8 représente schématiquement la position des panneaux avant et arrière lors de l'ouverture maximum de la partie avant.
- la figure 9 représente schématiquement la position des panneaux avant et arrière lors de l'ouverture maximum de la partie arrière.

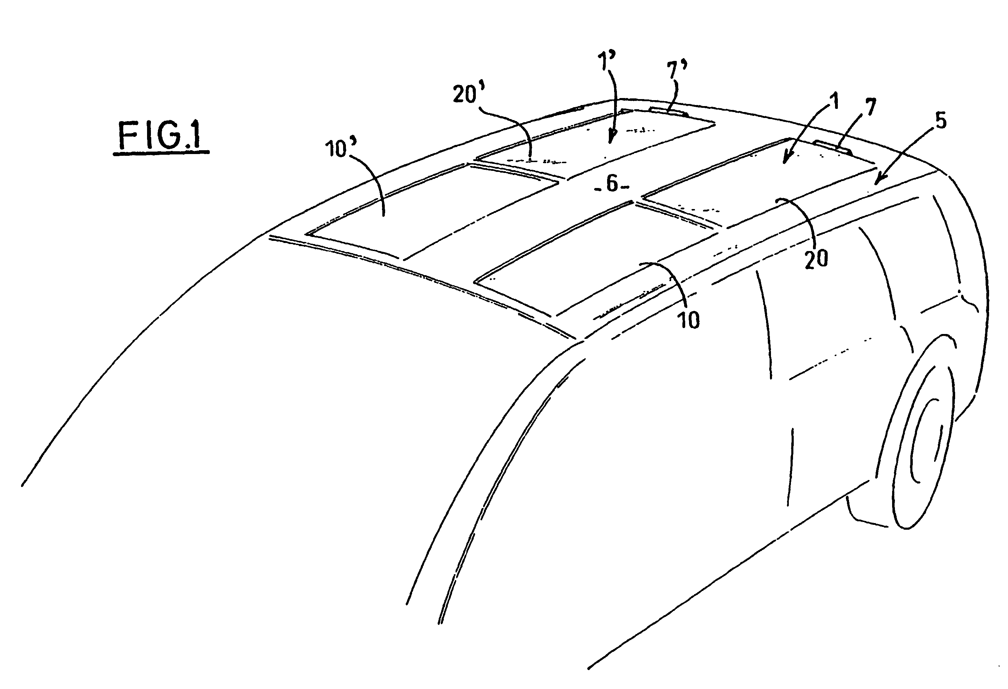

Tel que représenté à la figure 1 le toit 5 du véhicule automobile, constitué d'une surface fixe, comporte deux ouvertures 1 et 1' réalisées symétriquement de part et d'autre d'une traverse 6 dudit toit 5 disposée suivant l'axe longitudinal du véhicule, les ouvertures 1 et 1' étant obturées chacune par un panneau avant 10, 10' et un panneau arrière 20, 20'. Les panneaux avant 10, 10' et arrière 20, 20' peuvent-être indépendamment actionnés, par l'intermédiaire de moyens d'entraînements 7, 7', afin d'ouvrir en totalité ou partiellement les ouvertures 1 et 1' du toit 5 du véhicule automobile. Lorsque les panneaux 10, 10' et 20, 20' sont en position fermés ils sont affleurant à la surface fixe du toit 5 du véhicule automobile. Les panneaux 10, 10' et 20, 20' peuvent être métalliques et opaques ou réalisés dans un matériau transparent tel que le verre.

Les panneaux avant 10, 10' et arrière 20, 20' sont guidés longitudinalement par un ensemble d'éléments de guidage fixes 3, latéralement disposés de part et d'autre d'un axe de symétrie longitudinal de l'association desdits panneaux 10, 20 et 10', 20'.

Par le fait que les ouvertures 1 et 1' réalisées dans le toit 5 du véhicule automobile et réparties de part et d'autre de la traverse longitudinale 6, sont équipées chacune du même toit ouvrant, constitué d'un panneau avant 10 et d'un panneau arrière 20, et que la réalisation d'une ouverture unique dans la surface fixe du toit 5 ne change en rien les caractéristiques de l'invention il sera donc considéré dans la description qui suit que le cas d'une ouverture unique.

De part, la symétrie des moyens d'entraînements 7 et de l'ensemble des éléments de guidages 3 du toit ouvrant, constitué d'un panneau avant 10 et d'un panneau arrière 20, la description qui suit concernera uniquement qu'un coté dudit toit ouvrant.

Dans la description qui suit nous appellerons partie avant et arrière des panneaux 10 et 20, des éléments rigidements liés auxdits panneaux et réalisant la liaison entre les extrémités desdits panneaux et les différents moyens de guidage et de commande des déplacements de ceux-ci.

Les panneaux avant 10 et arrière 20 portent latéralement un joint 8 et 8' réalisant une étanchéité entre lesdits panneaux 10 et 20 en position fermée et la surface fixe du toit 5 du véhicule automobile. Les limites transversales avant et arrière de l'ouverture 1, réalisées dans la surface fixe du toit 5, portent respectivement des joints 9 et 9' afin d'effectuer localement une étanchéité avec les panneaux avant 10 et arrière 20 en position fermée. L'étanchéité à la jonction des panneaux avant 10 et arrière 20 fermés, est réalisée par un joint 4 porté par l'un desdits panneaux 10 ou 20.

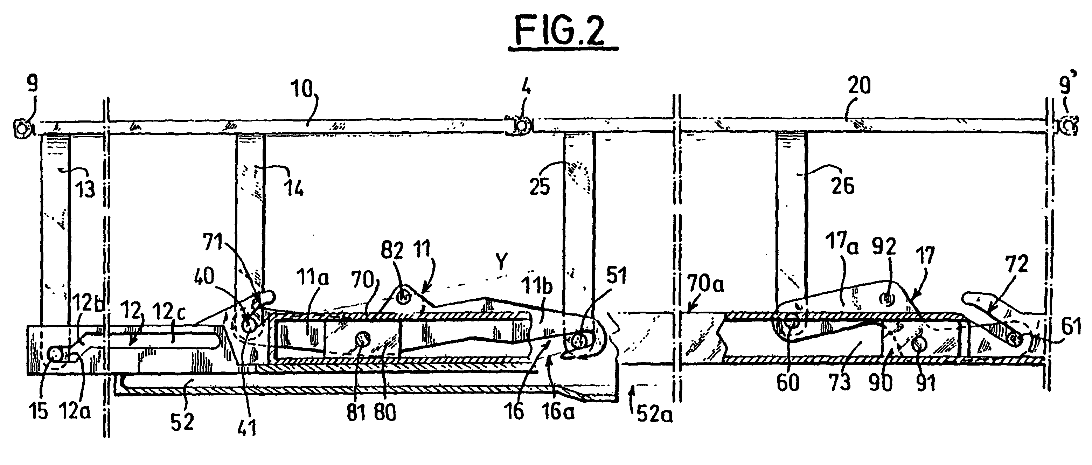

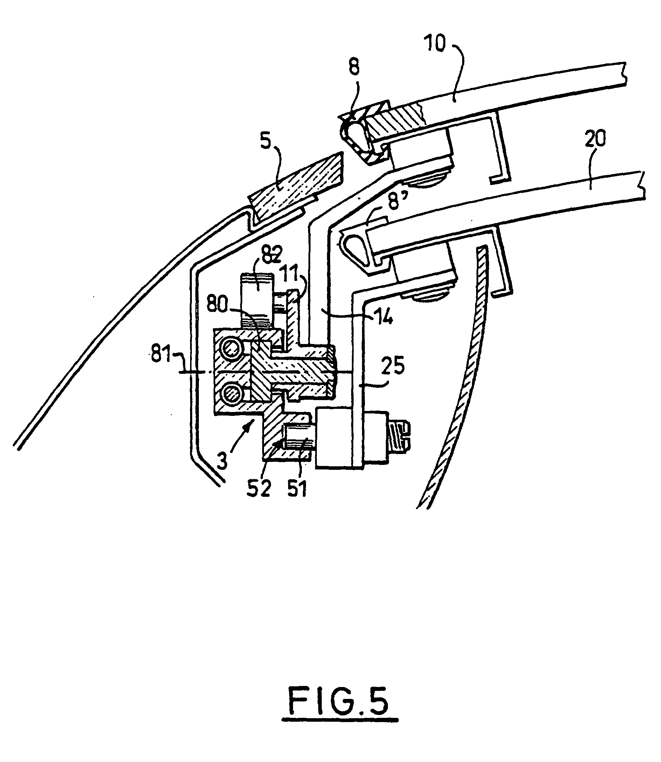

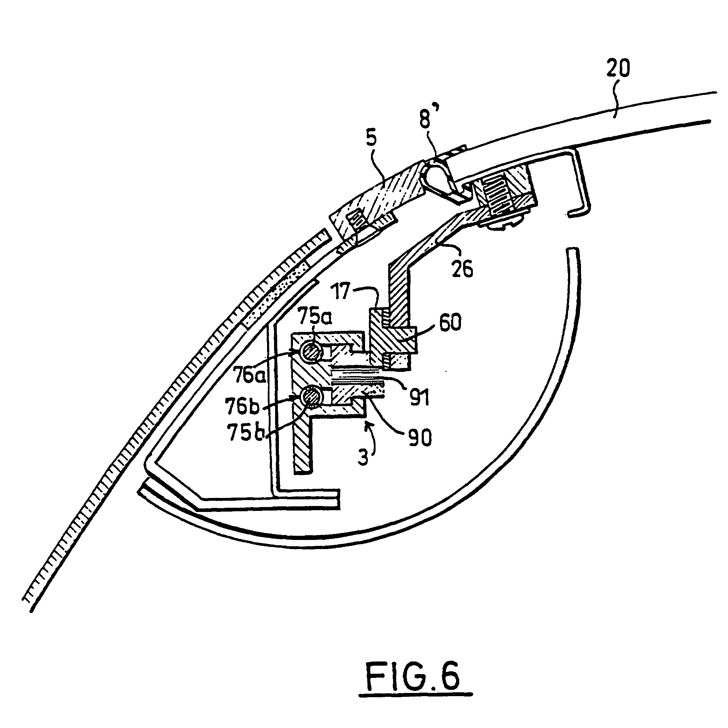

Tel que représenté dans les figures 2 à 6, le panneau avant 10 comporte d'une part une partie arrière 14 montée à articulation autour d'un axe transversal de liaison 40 porté par une extrémité 11a d'un palonnier de commande 11 et d'autre part une partie avant 13 montée à translation dans une lumière de guidage 12 des déplacements longitudinaux dudit panneau avant 10. La partie avant 13 du panneau avant 10 porte un galet latéral 15 qui coopère avec la lumière de guidage 12. La lumière de guidage 12 de la partie avant 13 du panneau avant 10 est décomposée en une lumière intermédiaire inclinée 12b reliant une lumière inférieure 12a et une lumière supérieure 12c parallèlement disposées. L'axe transversal de liaison 40 de la partie arrière 14 du panneau avant 10 avec le palonnier de commande 11 est muni d'un galet latéral 41 qui coopère avec une rainure inclinée 71 qui débouche sur un rail fixe 70 de guidage des déplacements longitudinaux du panneau avant 10.

Le panneau arrière 20 comporte d'une part une partie avant 25 montée à translation dans une lumière de guidage 16 dirigée longitudinalement et portée par une autre extrémité 11b dudit palonnier de commande 11 et d'autre part une partie arrière 26 montée à articulation autour d'un axe transversal de liaison 60 porté par une extrémité 17a d'une bielle de commande 17. La partie avant 25 du panneau arrière 20 coopère avec la lumière de guidage 16 par l'intermédiaire d'un galet latéral 51.

Le palonnier de commande 11 est monté à articulation autour d'un axe transversal 81 porté par un coulisseau d'entraînement 80 du panneau avant 10. Un moteur électrique, non représenté, commande les déplacements longitudinaux du coulisseau d'entraînement 80 du panneau avant 10 par l'intermédiaire d'un câble d'entraînement 75a. Les câbles d'entraînement 75a et 75b correspondent, d'une façon connue en soit, à des câbles filetés, flexibles et rigides en compression.

Le palonnier de commande 11 porte un galet 82 de limitation de la rotation dudit palonnier 11 autour de l'axe transversal d'entraînement 81. Le galet latéral 82 est placé sur le palonnier de commande 11 de façon à ce qu'une perpendiculaire au plan 16a du bord de la lumière de guidage passant par le centre du galet 82, soit située entre l'axe d'entraînement 81 et la lumière de guidage 16.

Une droite Y passant par le centre des galets 41 et 82 est parallèle au bord plan 16a de la lumière de guidage 16 et la distance de la droite Y au bord plan 16a est égale à la distance entre la face d'appui 70a du rail fixe 70 et la face d'appui 52a de la rainure de guidage 52.

La bielle de commande 17 est montée à articulation autour d'un axe transversal 91 porté par un coulisseau d'entraînement 90 du panneau arrière 20. Un moteur électrique, non représenté, commande les déplacements longitudinaux du coulisseau d'entraînement 90 du panneau arrière 20 par l'intermédiaire d'un câble d'entraînement 75b.

La bielle de commande 17 porte un galet 92 de limitation de la rotation de ladite bielle 17 autour de l'axe transversal d'entraînement 91. Le galet latéral 92 est situé sur l'extrémité 17a entre l'axe de liaison 60 et l'axe d'entraînement 91.

L'ensemble des éléments de guidage 3 des déplacement longitudinaux des panneaux avant 10 et arrière 20 comportent un canal supérieur 76a de guidage d'un câble d'entraînement 75a dudit panneau avant 10 et un canal inférieur 76b de guidage d'un câble d'entraînement 75b dudit panneau arrière 20. Les canaux de guidage 76a et 76b des câbles d'entraînement 75a et 75b débouchent latéralement sur une rainure 73 de guidage des déplacements longitudinaux des coulisseaux d'entraînement 80 et 90 des panneaux avant 10 et arrière 20.

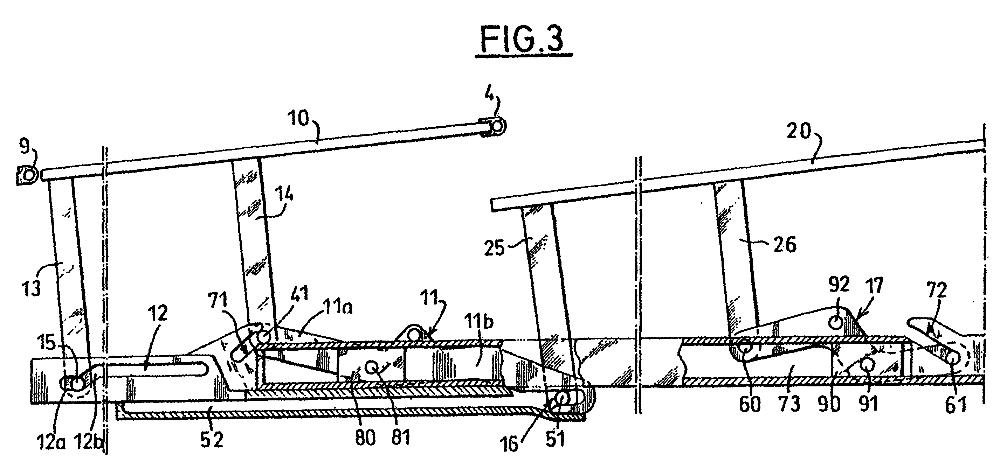

Tel que représentée aux figures 2 et 3, une phase de déverrouillage des panneaux avant 10 et arrière 20 est réalisée avant tout autre possibilité de déplacement desdits panneaux 10 et 20.

Le câble d'entraînement 75a déplace longitudinalement le coulisseau d'entraînement 80 du panneau avant 10. Le galet 41 porté par l'axe de liaison 40 passe d'une position basse à une position haute par l'intermédiaire de la rainure inclinée 71 produisant ainsi une rotation du palonnier de commande 11 autour de l'axe transversal 81 porté par le coulisseau d'entraînement 80. La rotation du palonnier de commande 11 réalise un déplacement longitudinal du panneau avant 10 correspondant à la longueur de la lumière inférieure 12a de la lumière de guidage 12. Lors de la rotation du palonnier de commande 11 le galet 82 de limitation de la rotation entre en contact avec le rail fixe 70 de guidage en même temps que le galet 41 porté par l'axe de liaison 40 débouche sur ledit rail fixe 70 de guidage. La présence des deux galets 82 et 41 sur le rail fixe 70 de guidage réalise de ce fait une impossibilité de rotation autour de l'axe transversal d'entraînement 81 pour le palonnier de commande 11 lors des déplacements de translation ultérieurs du panneau avant 10.

La lumière de guidage 16 portée par le palonnier de commande 11 est ouverte à une extrémité adjacente à l'ouverture d'une rainure fixe 52 de guidage des déplacements de la partie avant 25 du panneau arrière 20, lorsque le galet 41 porté par l'axe de liaison 40 et le galet 82 de limitation de la rotation du palonnier de commande 11 sont en contact avec le rail fixe de guidage 70. La position du palonnier commande 11 ainsi obtenue permet les déplacements longitudinaux ultérieurs du panneau arrière 20.

La manoeuvre ainsi effectuée réalise une position de ventilation de l'habitacle du véhicule automobile par inclinaison, au niveau du palonnier de commande 11, du panneau avant 10 vers le haut et du panneau arrière 20 vers le bas, tel que représenté à la figure 3.

Le câble d'entraînement 75b déplace longitudinalement le coulisseau d'entraînement 90 du panneau arrière 20. Un galet 61 porté latéralement par une extrémité 17b de la bielle de commande 17 passe d'une position basse à une position haute, correspondant au rail fixe 70 de guidage, par l'intermédiaire d'une lumière inclinée 72 débouchant sur ledit rail fixe 70 de guidage et produisant ainsi une rotation de la bielle de commande 17 autour de l'axe transversal 91 porté par le coulisseau d'entraînement 90. Lors de la rotation de la bielle de commande 17, le galet 92 de limitation de la rotation, porté par ladite bielle de commande 17, entre en contact avec le rail fixe 70 de guidage en même temps que le galet 61, porté par l'extrémité 17b de ladite bielle 17, débouche sur le même rail fixe 70 de guidage. La présence des deux galets 61 et 92 sur le rail fixe 70 de guidage réalise de ce fait une impossibilité de rotation autour de l'axe transversal d'entraînement 91 pour la bielle de commande 17 lors des déplacements de translation ultérieurs du panneau arrière 20.

Lors de la rotation de la bielle de commande 17 autour de l'axe transversal d'entraînement 91, la position de l'axe de liaison 60 du panneau arrière 20 avec ladite bielle de commande 17, passe d'une position haute de fermeture dudit panneau arrière 20 à une position basse, qui positionne le panneau arrière 20 parallèlement à la direction des déplacements longitudinaux ultérieurs. De part la rotation de la bielle de commande 17 le panneau arrière 20 effectue un déplacement permettant de désengager le galet 51 de la lumière de guidage 16 portée par le palonnier de commande 11 afin de positionner ledit galet 51 dans la rainure fixe 52 de guidage des déplacements longitudinaux du panneau arrière 20.

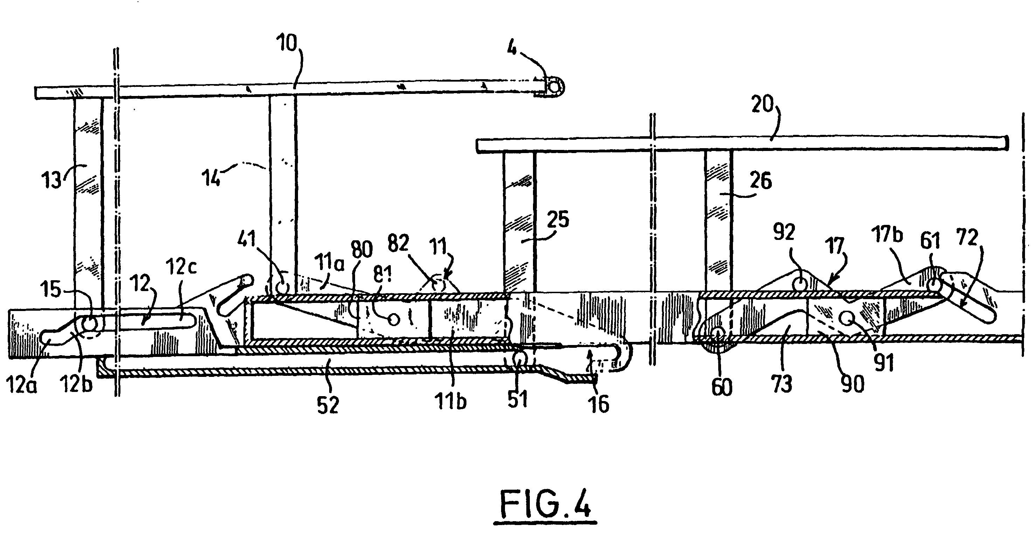

Le panneau arrière 20 étant en position basse, le panneau avant 10 effectue un déplacement afin que le galet 15 passe de la lumière 16 vers la lumière supérieure 12c de la lumière de guidage 12 par l'intermédiaire de la lumière intermédiaire inclinée 12b et permettant ainsi aux panneaux avant 10 et arrière 20 d'être parallèles, tel que représenté à la figure 4.

Le rail fixe 70 sert à la fois au guidage des déplacements longitudinaux du panneau avant 10 et du panneau arrière 20.

La phase de déverrouillage effectuée autorise les déplacements longitudinaux des panneaux avant 10 et arrière 20 indépendamment l'un de l'autre.

Les figures de 7 à 9 représentent des exemples de déplacement des panneaux avant 10 et arrière 20 entre leurs positions de fin de course avant et arrière. Les positions de fin de course avant du panneau avant 10 et de fin de course arrière du panneau arrière 20 sont définies par les positions obtenues après la réalisation de la phase de déverrouillage.

Lors des déplacements longitudinaux des panneaux avant 10 et arrière 20 la rencontre des coulisseaux d'entraînement 80 et 90, du palonnier de commande 11 et de la bielle de commande 17, ne permet pas une superposition totale desdits panneaux. Il en résulte donc un dépassement, de la partie avant 13 du panneau avant 10 par rapport à la partie avant 25 du panneau arrière 20, représenté aux figures de 8 à 9 par la côte X.

## Revendications

1. Toit ouvrant comportant, dans une direction longitudinale, un panneau avant (10) et un panneau arrière (20) de fermeture d'une ouverture (1) réalisée dans une surface fixe du toit (5) d'un véhicule automobile, le panneau avant (10), qui comporte une partie avant (13) montée à translation dans une lumière de guidage (12) des déplacements longitudinaux dudit panneau avant (10), et le panneau arrière (20), qui comporte une partie arrière (26) montée à articulation autour d'un axe de liaison transversal (60) porté par une extrémité d'une bielle de commande (17a) étant réglables chacun indépendamment entre une position de fin de course avant et une position de fin de course arrière, **caractérisé par le fait que** le panneau avant (10) comporte une partie arrière (14) montée à articulation autour d'un axe transversal de liaison (40) porté par une extrémité (11a) d'un palonnier de commande (11) et que le panneau arrière (20) comporte une partie avant (25) montée à translation dans une lumière de guidage (16) dirigée longitudinalement et portée par une autre extrémité (11b) dudit palonnier de commande (11)

2. Toit ouvrant selon la revendication 1, **caractérisé par le fait que** le palonnier de commande (11) est monté à articulation autour d'un axe transversal (81) porté par un coulisseau d'entraînement (80) des déplacements longitudinaux du panneau avant (10).

3. Toit ouvrant selon la revendication 1, **caractérisé par le fait que** la bielle de commande (17) est montée à articulation autour d'un axe transversal d'entraînement (91) porté par un coulisseau d'entraînement (90) des déplacements longitudinaux du panneau arrière (20).

4. Toit ouvrant selon la revendication 1, **caractérisé par le fait que** la lumière de guidage (16) portée par le palonnier de commande (11) est ouverte par une de ses extrémités.

5. Toit ouvrant selon l'une quelconque des revendications 1 ou 3, **caractérisé par le fait que** la bielle de commande (17) comporte un galet (92) de limitation de la rotation de ladite bielle (17) autour de l'axe transversal d'entraînement (91).

6. Toit ouvrant selon l'une quelconque des revendications 1 ou 3, **caractérisé par le fait qu'**une extrémité (17b) de la bielle de commande (17) porte un galet latéral qui coopère avec une rainure inclinée, débouchant sur un rail fixe (70) de guidage des déplacements longitudinaux du panneau arrière (20).

7. Toit ouvrant selon la revendication 1, **caractérisé par le fait que** la lumière de guidage (12) est composée d'une lumière intermédiaire inclinée (12b) reliant une lumière inférieure (12a) et une lumière supérieure (12c) parallèlement disposées.

8. Toit ouvrant selon la revendication 1, **caractérisé par le fait que** l'axe transversal de liaison (40) est muni d'un galet latéral (41) qui coopère avec une rainure inclinée (71), débouchant sur un rail fixe (70) de guidage des déplacements longitudinaux du panneau avant (10).

9. Toit ouvrant selon l'une quelconque des revendications 1 ou 2, **caractérisé par le fait que** le palonnier de commande (11) porte latéralement un galet (82) de limitation de la rotation dudit palonnier (11) autour de l'axe transversal d'entraînement (81).

10. Toit ouvrant selon la revendication 9, **caractérisé par le fait qu'**une droite Y passant par le centre des galets (41) et (82) est parallèle au bord plan (16a) de la lumière de guidage (16) et que la distance de la droite Y au bord plan (16a) est égale à la distance entre la face d'appui (70a) du rail fixe (70) et la face d'appui (52a) de la rainure de guidage (52).

## Claims

1. A sun roof comprising, in a longitudinal direction, a front panel (10) and a rear panel (20) closing an opening (1) provided in a fixed surface (5) of the roof of a motor vehicle, the front panel (10), which comprises a front portion (13) mounted in translation in the slot (12) guiding the longitudinal displacements of the front panel (10), and the rear panel (20), which comprises a rear portion (26) mounted in an articulated manner about a transverse connection spindle (60) borne by an end of a control rod (17a), each being adjustable independently between a front end-of-stroke position and a rear end-of-stroke position, **characterised in that** the front panel (10) comprises a rear portion (14) mounted in an articulated manner about a transverse connection spindle (40) borne by an end (11a) of a control column (11) and **in that** the rear panel (20) comprises a front portion (25) mounted in translation in a longitudinally oriented guide slot (16) borne by another end (11b) of the control column (11).

2. A sun roof as claimed in claim 1, **characterised in that** the control column (11) is mounted in an articulated manner about a transverse spindle (81) borne by a slide (80) driving the longitudinal displacements of the front panel (10).

3. A sun roof as claimed in claim 1, **characterised in that** the control rod (17) is mounted in an articulated manner about a transverse drive spindle (91) borne by a slide (90) driving the longitudinal displacements of the rear panel (20).

4. A sun roof as claimed in claim 1, **characterised in that** the guide slot (16) borne by the control column (11) is open via one of its ends.

5. A sun roof as claimed in any one of claims 1 or 3, **characterised in that** the control rod (17) comprises a roller (92) limiting the rotation of the control rod (17) about the transverse drive spindle (91).

6. A sun roof as claimed in any one of claims 1 or 3, **characterised in that** one end (17b) of the control rod (17) bears a lateral roller which cooperates with an inclined groove communicating with a fixed rail (70) for guiding the longitudinal displacements of the rear panel (20).

7. A sun roof as claimed in claim 1, **characterised in that** the guide slot (12) is composed of an intermediate inclined slot (12b) connecting a lower slot (12a) and an upper slot (12c) disposed in parallel.

8. A sun roof as claimed in claim 1, **characterised in that** the transverse connection spindle (40) is provided with a lateral roller (41) which cooperates with an inclined groove (71) communicating with a fixed rail (70) for guiding the longitudinal displacements of the front panel (10).

9. A sun roof as claimed in any one of claims 1 or 2, **characterised in that** the control column (11) laterally bears a roller (82) limiting the rotation of this column (11) about the transverse drive spindle (81).

10. A sun roof as claimed in claim 9, **characterised in that** a straight line (Y) passing through the centre of the rollers (41) and (82) is parallel to the plane edge (16a) of the guide slot (16) and **in that** the distance of the straight line (Y) from the plane edge (16a) is equal to the distance between the bearing surface (70a) of the fixed rail (70) and the bearing surface (52a) of the guide groove (52).

## Patentansprüche

1. Schiebedach mit, in Längsrichtung gesehen, einer vorderen Schiebedachfläche (10) und einer hinteren Schiebedachfläche (20) zum Verschliessen einer Öffnung (1), die in einer feststehenden Dachfläche (5) eines. Kraftfahrzeuges ausgebildet ist, wobei die vordere Schiebedachfläche (10), die einen vorderen Abschnitt (13) aufweist, der verschiebbar in einer Aussparung (12) zur Führung der Bewegungen in Längsrichtung der vorderen Schiebedachfläche (10) gelagert ist, und die hintere Schiebedachfläche (20), die einen hinteren Abschnitt (26) aufweist, der gelenkig an einer quer verlaufenden Verbindungsachse (60) angeordnet ist, die von einem Ende (17a) eines Steuerhebels getragen wird, unabhängig voneinander betätigbar sind zwischen einer vorderen Endstellung und einer hinteren Endstellung, **dadurch gekennzeichnet, dass** die vordere Schiebedachfläche (10) einen hinteren Abschnitt (14) aufweist, der gelenkig an einer quer verlaufenden Verbindungsachse (40) angeordnet ist, die von einem Ende (11a) eines Steuerhebels (11) getragen wird und dass die hintere Schiebedachfläche (20) einen vorderen Abschnitt (25) aufweist, der verschiebbar in einer sich in Längsrichtung erstreckenden Führungsaussparung (16) gelagert ist, die von einem anderen Ende (11b) des Steuerhebels (11) getragen wird.

2. Schiebedach nach Anspruch 1, **dadurch gekennzeichnet, dass** der Steuerhebel (11) gelenkig an einer quer verlaufenden Achse (81) angeordnet ist, die von einem Antriebsschieber (80) für die Längsbewegungen der vorderen Schiebedachfläche (10) getragen wird.

3. Schiebedach nach Anspruch 1, **dadurch gekennzeichnet, dass** der Steuerhebel (17) gelenkig an einer quer verlaufenden Antriebsachse (91) angeordnet ist, die von einem Antriebsschieber (90) für die Längsbewegungen der hinteren Schiebedachfläche (20) getragen wird.

4. Schiebedach nach Anspruch 1, **dadurch gekennzeichnet, dass** die vom Steuerhebel (11) getragene Führungsaussparung (16) an einem ihrer Enden offen ist.

5. Schiebedach nach einem der Ansprüche 1 oder 3, **dadurch gekennzeichnet, dass** der Steuerhebel (17) eine Rolle (92) zur Begrenzung der Verdrehung des Hebels (17) um die quer verlaufende Antriebsachse (91) aufweist.

6. Schiebedach nach einem der Ansprüche 1 oder 3, **dadurch gekennzeichnet, dass** ein Ende (17b) des Steuerhebels (17) eine seitliche Rolle aufweist, die mit einer geneigten Nut zusammenwirkt, die in einer feststehenden Führungsschiene (70) für die Längsbewegungen des hinteren Schiebedachfläche (20) mündet.

7. Schiebedach nach Anspruch 1, **dadurch gekennzeichnet, dass** die Führungsaussparung (12) eine geneigte Zwischenaussparung (12b) aufweist, die eine untere Aussparung (12a) mit einer zu ihr parallelen oberen Aussparung (12c) verbindet.

8. Schiebedach nach Anspruch 1, **dadurch gekennzeichnet, dass** die quer verlaufende Verbindungsachse (40) eine seitliche Rolle (41) aufweist, die mit einer geneigten Nut (71) zusammenwirkt, die in einer feststehenden Führungsschiene (70) für die Längsbewegungen der vorderen Schiebedachfläche (10) mündet.

9. Schiebedach nach einem der Ansprüche 1 oder 2, **dadurch gekennzeichnet, dass** der Steuerhebel (11) mit einer seitlichen Rolle (82) versehen ist zur Begrenzung der Verdrehung dieses Hebels (11) um die quer verlaufende Antriebsachse (81).

10. Schiebedach nach Anspruch 9, **dadurch gekennzeichnet, dass** eine Gerade Y, die die Mitten der Rollen (41) und (82) durchsetzt, parallel ist zum ebenen Rand (16a) der Führungsaussparung (16) und dass der Abstand der Geraden Y vom ebenen Rand (16a) gleich ist dem Abstand der Stützfläche (70a) der feststehenden Schiene (70) von der Stützfläche (52a) der Führungsnut (52).
